# EUROPÄISCHE PATENTSCHRIFT

(11) **EP 0 971 982 B1**
(45) Veröffentlichungstag und Bekanntmachung des Hinweises auf die Patenterteilung: **18.06.2003**
(21) Anmeldenummer: 98919232.3
(22) Anmeldetag: 07.04.1998
(51) Int. Cl.: C08L 77/00

(54) **THERMOPLASTISCHE FORMKÖRPER MIT SEGMENTEN UNTERSCHIEDLICHER STEIFIGKEIT**
THERMOPLASTIC SHAPED BODIES WITH SEGMENTS OF VARYING RIGIDITY
CORPS MOULES THERMOPLASTIQUES COMPORTANT DES SEGMENTS DE DIFFERENTES RIGIDITES

(30) Priorität: 11.04.1997 DE 19715120
(43) Veröffentlichungstag der Anmeldung: 19.01.2000
(73) Patentinhaber: BASF AKTIENGESELLSCHAFT, 67056 Ludwigshafen (DE)
(72) Erfinder: GLÜCK, Alexander, D-67251 Freinsheim (DE); GÖTZ, Walter, D-67067 Ludwigshafen (DE); LOHRBÄCHER, Volker, D-69469 Weinheim (DE); MC KEE, Graham, Edmund, D-67433 Neustadt (DE); VÖLKEL, Mark, D-68526 Ladenburg (DE)
(74) Vertreter: Isenbruck, Günter, Dr.
(86) Internationale Anmeldenummer: EP9802022
(87) Internationale Veröffentlichungsnummer: WO98046681

(56) Entgegenhaltungen:
- EP-A- 0 261 748
- EP-A- 0 400 428
- EP-A- 0 738 763
- US-A- 4 174 358

## Beschreibung

Die Erfindung betrifft thermoplastische Formkörper, insbesondere Hohlformkörper, aus Hart- und Weichsegmenten, Verfahren zu ihrer Herstellung durch Spritzguß, Extrusion und Extrusionsblasformen sowie die Verwendung von Formmassen A und B zur Herstellung der Formkörper.

Die Herstellung von Hohlformkörpern geschieht heute in großem Maß durch Blasformen. Dabei wird der Schlauch in das geöffnete Werkzeug extrudiert und aufgeblasen und danach das Werkzeug geschlossen. Über die gewünschte Form hinausstehende Kunststoffteile werden abgequetscht und nach der Entformung als sogenannte Butzen entfernt, die rezykliert werden müssen. Die erhaltenen Formteile weisen eine umlaufende Quetschnaht auf, die eine Schwachstelle darstellt.

Zur quetschnahtfreien Herstellung von Formteilen mit komplizierter Geometrie steht heute mit dem 3D-Blasformen ein fortschrittliches Verfahren zur Verfügung. Im Gegensatz zum oben beschriebenen Verfahren fallen überstehende Kunststoffteile, die abgequetscht und als Butzen entfernt werden müssen, nur an den beiden Enden des Schlauches bzw. Vorformlings an. Auch vermeidet dieses Verfahren die Bildung von längslaufenden Quetschnähten. Dieses Verfahren ist zum Beispiel in DE-A 37 18 605 beschrieben.

Zur Herstellung von Formteilen mit in Längsrichtung alternierender Materialkombination wird dieses Verfahren in vorteilhafter Weise mit der sequentiellen Coextrusion kombiniert. Dabei wird bei der Extrusion des Vorformlings die formgebende Düse abwechselnd von mehreren Extrudern mit verschiedenen Materialien beschickt, so daß ein Schlauch mit Segmenten unterschiedlicher Zusammensetzung und Materialeigenschaften gebildet wird. Dadurch ist es beispielsweise möglich, Blasformteile mit flexiblen Endzonen und starrem Mittelteil in einem Arbeitsgang herzustellen. Bisher mußten solche Teile durch aufwendige Montage vieler Teile hergestellt werden.

Für die Coextrusion ist eine gute Haftung der Komponenten zueinander notwendig. Vorteilhafterweise erfolgt daher kein völliges Umschalten von einer Komponente auf die andere, sondern nur eine Variierung des Wandstärkeverhältnisses, so daß in jedem Abschnitt des Formteils Schichten beider Komponenten vorliegen. Dadurch wird eine flächige Verbindung der beiden Komponenten erreicht, wodurch die Haftung verbessert wird.

Für eine gute Haftung ist auch eine gute Verträglichkeit der Komponenten untereinander Voraussetzung.

Anwendungsgebiete für Formteile mit alternierenden Eigenschaftskombinationen sind der Automobil- und Maschinenbau. So können in einem Rohr - beispielsweise in einem Ladeluftrohr für einen Kraftfahrzeug-Turbodieselmotor - Dämpfungs- und Wärmeausdehnungssegmente untergebracht werden. Ferner sind für viele Anwendungen eine gute Wärmeformbeständigkeit und eine hohe Chemikalienresistenz der Teile - beispielsweise gegen Verschmutzung durch Öl - erforderlich, wobei beide Komponenten diese Eigenschaften aufweisen müssen, da die Qualität eines aus mehreren Komponenten bestehenden Teils durch seine schwächste Komponente begrenzt wird.

In EP-B 0 393 409 sind Formkörper aus mehreren, über begrenzte Berührungsflächen in Verbindung stehenden Teilen beschrieben, wobei die Teilstücke aus einem polyolefinmodifizierten Polyamid - einem Polyamid in Mischung mit einem mit Carboxyl- oder Säureanhydridgruppen funktionalisierten Polyolefin - bzw. aus einem Polyolefin bestehen. Die Verbindung der Teile erfolgt durch Anspritzen oder Anextrudieren einer Komponente an ein erstarrtes Teilstück aus der anderen Komponente. Die Haftung der an sich inkompatiblen Polymeren der Formkörper-Teilstücke ist auf die verträglichmachende Wirkung des funktionalisierten Polyolefins zurückzuführen.

In EP-A 0 659 534 sind sequentiell extrudierte Kühlflüssigkeitsleitungen mit einer berstdruckfesten Außenschicht und einer für Kühlmittel inerten, nicht quellbaren Innenschicht offenbart, wobei die äußere Schicht aus einem Polyamid und die mit der äußeren Schicht verträgliche Innen- oder Zwischenschicht aus mit Carboxyl- oder Säureanhydridgruppen modifizierten Polyolefinen besteht.

Gemäß EP-A 0 659 535 können diese Kühlflüssigkeitsleitungen durch Extrusionsblasformen, kombiniert mit 3D-Schlauchmanipulation, hergestellt werden.

Nachteilig an diesen Formteilen ist die Verwendung von Schichten aus Polyolefinkomponenten mit vergleichsweise geringer Wärmeformbeständigkeit. Aufgabe der Erfindung ist es daher, thermoplastische Formteile mit alternierenden Hart/Weich-Segmenten bereitzustellen, wobei die Weichsegmente neben einer hohen Flexibilität insbesondere auch eine hohe Chemikalienresistenz und Wärmeformbeständigkeit aufweisen und zudem eine gute Haftung zu einem im wesentlichen aus Polyamid bestehenden Hartsegment gegeben ist. Ferner ist es Aufgabe der Erfindung, Formteile mit Segmenten unterschiedlicher Steifigkeit aus flächig miteinander verbundenen Komponenten bereitzustellen, wobei jede der Komponenten eine hohe Wärmeform- und Wärmealterungsbeständigkeit, hohe Dauergebrauchstemperatur, hohe Chemikalienresistenz, insbesondere eine hohe Resistenz gegen Öl, Kraftstoff und Kühlflüssigkeiten, sowie eine hohe Zug- bzw. Berstdruckfestigkeit aufweist.

Die Aufgabe wird erfindungsgemäß gelöst durch Formkörper aus
a) 5 bis 95 Gew.-% einer Formmasse A aus
   a1) 40 bis 100 Gew.-% mindestens eines thermoplastischen Polyamids, Copolyamids oder deren Blends als Komponente A1,
   a2) 0 bis 60 Gew.-% Füll- und/oder Verstärkungsstoffen als Komponente A2,
   a3) 0 bis 20 Gew.-% Schlagzähmodifikatoren als Komponente A3 und
   a4) 0 bis 30 Gew.-% weiterer Zusatzstoffe und Verarbeitungshilfsmittel als Komponente A4,
   wobei die Summe der Mengen der Komponenten A1 und gegebenenfalls A2 bis A4 100 Gew.-% ergibt,
b) 5 bis 95 Gew.-% einer Formmasse B aus
   b1) 20 bis 79,9 Gew.-% mindestens eines thermoplastischen Polyamids, Copolyamids oder deren Blends als Komponente B1,
   b2) 20,1 bis 80 Gew.-% mindestens eines vernetzten kautschukelastischen Polymerisats als Komponente B2 und
   b3) 0 bis 30 Gew.-% weiterer Zusatzstoffe und Verarbeitungshilfsmittel als Komponente B3,
   wobei die Summe der Mengen der Komponenten B1, B2 und gegebenenfalls B3 100 Gew.-% ergibt,
wobei im Formkörper Segmente aus den Formmassen A und B flächig miteinander verbunden sind.

Es wurde gefunden, daß bei Verwendung eines hochvernetzten, kautschukelastischen Polymerisats in Mischung mit einem Polyamid auch bei einem hohen Anteil des kautschukelastischen Polymerisats in der Mischung die kohärente Phase von dem Polyamid gebildet wird. Durch den Polymerisatanteil wird eine Weichkomponente (Formmasse B) erhalten, die auch die Eigenschaften des Polyamids, insbesondere eine hohe Wärmeformbeständigkeit, Chemikalienresistenz, Zug- und Berstdruckfestigkeit aufweist und außerdem mit der Hartkomponente (Formmasse A) aus Polyamid verträglich ist.

### FORMMASSE A

Formmasse A ist aufgebaut aus
a1) 40 bis 100 Gew.-% mindestens eines thermoplastischen Polyamids, Copolyamids oder deren Blends als Komponente A1,
a2) 0 bis 60 Gew.-% Füll- und/oder Verstärkungsstoffen als Komponente A2,
a3) 0 bis 20 Gew.-% Schlagzähmodifikatoren als Komponente A3,
a4) 0 bis 30 Gew.-% weiterer Zusatzstoffe und Verarbeitungshilfsmittel als Komponente A4,
wobei die Summe der Mengen der Komponenten A1 und gegebenenfalls A2 bis A4 100 Gew.-% ergibt,

Als Komponente A1 enthalten die Formmassen A 40 bis 100, bevorzugt 70 bis 100, besonders bevorzugt 85 bis 100 Gew.-% eines thermoplastischen Polyamids, Coplyamids oder deren Blends.

Die verwendbaren Polyamide sind an sich bekannt. Beispiele hierfür sind Polyhexamethylenadipinsäureamid, Polyhexamethylenpimelinsäureamid, Polyhexamethylenkorksäureamid, Polyhexamethylenazelainsäureamid, Polyhexamethylensebacinsäureamid, Polyhexamethylendodekandisäurediamid, Polyoctamethylenkorksäureamid, Polydodekamethylendodekandisäureamid, Poly-11-aminoundekansäureamid und Bis-(4-aminocyclohexyl)-methandodecansäureamid oder die durch Ringöffnung von Lactamen, z. B. Polycaprolactam oder Polylaurinlactam, erhaltenen Produkte. Auch Polyamide auf der Basis von Terephthaloder Isophthalsäure als Säurekomponente und/oder Trimethylhexamethylendiamin, Bis-(4-aminocyclohexyl)-methan oder 2,2-Di-(4-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet. Als Beispiel hierfür seien Copolykondensate aus Terephthalsäure, Hexamethylendiamin und Caprolactam (PA 6T/6) genannt, sowie aus Terephthalsäure, Isophthalsäure, Adipinsäure und Hexamethylendiamin (PA 6T/6I), welche auch als ternäre Copolykondensate mit anderen polyamidbildenden Monomeren aufgebaut sein können: z. B. mit Adipinsäure (PA 6I/6T/66) oder mit alicyclischen Diaminen wie Bis(4-aminocyclohexyl)methan oder Bis(4-amino-3-methylcyclohexyl)methan.

Vorzugsweise setzt man teilkristalline Polyamide ein, bevorzugt PA 6, PA 66, PA 6T/6, PA 6/6T, PA 6T/6I, PA 6T/66, PA 6T/6I/66 PA 66/6T (Copolykondensate aus Hexamethylendiamin, Adipinsäure, Caprolactam und Iso- bzw. Terephthalsäure) sowie PA 46. Es können auch Mischungen verschiedener Polyamide eingesetzt werden. Besonders bevorzugt werden Polyamid 66 und Polyamid 6, insbesondere Polyamid 6 eingesetzt.

Gemäß einer Ausführungsform der Erfindung liegt die Viskositätszahl der Komponente A1 zwischen 130 bis 500, bevorzugt liegt sie zwischen 140 bis 400. Die Viskositätszahlen werden üblicherweise nach ISO 307 an 0,5 gew.-%-igen Lösungen in 96 gew.-%-iger Schwefelsäure bei 25°C bestimmt.

Als Komponente A2 kann die Formmasse A bis zu 60, bevorzugt 10 bis 30, besonders bevorzugt 10 bis 20 Gew.-% eines Füll- oder Verstärkungsstoffes enthalten. Bevorzugt sind faserförmige Verstärkungsstoffe wie Glasfasern, Kohlenstoffasern, Aramid-Fasern und Kaliumtitanat-Fasern. Besonders bevorzugt werden Glasfasern, insbesondere Glasfasern aus E-Glas, eingestezt.

Weiterhin können als Komponente A2, allein oder in Mischung mit den genannten faserförmigen Verstärkungsstoffen, mineralische Füllstoffe wie Wollastonit, Kaolin, Quarz, Glimmer oder Calciumcarbonat vorliegen.

Bevorzugt sind die Füll- bzw. Verstärkungsstoffe mit einem Haftvermittler wie Alkylaminoalkoxysilan behandelt.
In einer besonders bevorzugten Ausführungsform der Erfindung besteht die Komponente A2 ausschließlich aus Glasfasern.

Als Komponente A3 kann die Formmasse A bis zu 20 Gew.-% Schlagzähmodifikatoren enthalten. Schlagzähmodifikatoren sind mit reaktiven Gruppen gepfropfte Polyolefine und sind an sich bekannt. Geeignete Schlagzämodifikatoren sind beispielsweise in US 4,174,358 , Spalte 6, Zeile 21 bis Spalte 7, Zeile 26 beschrieben.

Als Komponente A4 kann die Formmasse A bis zu 30 Gew.-% weiterer Zusatzstoffe und Verarbeitungshilfsmittel enthalten. Deren Anteil beträgt vorzugsweise bis zu 10 Gew.-%, bezogen auf das Gesamtgewicht der Komponente A.

Übliche Zusatzstoffe sind beispielsweise Stabilisatoren und Oxidationsverzögerer, Mittel gegen Wärmezersetzung und Zersetzung durch UV-Licht, Gleit- und Entformungsmittel, Farbstoffe, Pigmente und Flammschutzmittel.

Oxidationsverzögerer und Wärmestabilisatoren, die den thermoplastischen Formmassen gemäß der Erfindung zugesetzt werden können, sind z. B. Halogenide, ausgewählt aus der Gruppe von Metallen der Gruppe I des Periodensystems, z. B. Lithium-, Natrium-, Kaliumhalogenide, und Kupfer-(I)-halogenide, z. B. Chloride, Bromide oder Iodide, oder Mischungen davon. Ferner kann man sterisch gehinderte Phenole, sekundäre aromatische Amine, Hydrochinone, substituierte Vertreter dieser Gruppe und Mischungen dieser Verbindungen, vorzugsweise in Konzentrationen bis zu 1 Gew.-%, bezogen auf das Gewicht der Mischung, einsetzen.

Beispiele für UV-Stabilisatoren sind substituierte Resorcine, sterisch gehinderte Phenole, Salicylate, Benzotriazole und Benzophenone, die man im allgemeinen in Mengen bis zu 2 Gew.-% einsetzen kann.

Gleit- und Entformungsmittel, die man in der Regel in Mengen bis zu 1 Gew.-% den thermoplastischen Formmassen zusetzen kann, sind beispielsweise langkettige Fettsäuren oder deren Derivate wie Stearinsäure, Stearylalkohol, Stearinsäurealkylester und -amide sowie Ester des Pentaerythrits mit langkettigen Fettsäuren.

Als Flammschutzmittel kann man beispielsweise roten oder schwarzen Phosphor oder eine phosphorhaltige Verbindung in Mengen von 3 bis 10 Gew.-% einsetzen. Bevorzugtes Flammschutzmittel ist elementarer Phosphor, insbesondere in Kombination mit glasfaserverstärkten Formmassen.

Weitere bevorzugte Flammschutzmittel sind organische Phosphorverbindungen wie die Ester der Phosphorsäure, Phosphorigen Säure und von Phosphonund Phosphinsäure sowie tertiäre Phosphine und Phosphinoxide. Als Beispiel sei Triphenylphosphinoxid genannt. Dieses kann allein oder vermischt mit Hexabrombenzol oder einem chlorierten Biphenyl und wahlweise Antimontrioxid verwendet werden.

Als Flammschutzmittel sind auch solche Verbindungen geeignet, die Phosphor-Stickstoff-Bindungen enthalten, wie Phosphonnitrilchlorid, Phosphorsäureesteramide, Phosphinsäureamide, Tris-(aziridinyl)-phosphinoxid oder Tetrakis-(hydroxymethyl)-phosphoniumchlorid.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden.

Als Keimbildungsmittel können Natriumphenylphosphinat, Aluminiumoxid, Siliziumdioxid, Nylon 22 sowie bevorzugt Talkum eingesetzt werden, üblicherweise in Mengen bis zu 1 Gew.-%.

Die Komponente A hat vorzugsweise einen Zug-Elastizitätsmodul > 2000, besonders bevorzugt > 2800, insbesondere > 3500 MPa. Die Bestimmung des Zug-Elastizitätsmoduls erfolgt dabei nach ISO 527 an einkomponentigen Zugstäben.

### FORMMASSE B

Die Formmasse B ist aufgebaut aus
b1) 20 bis 79,9 Gew.-% mindestens eines thermoplastischen Polyamids, Copolyamids oder deren Blends als Komponente B1,
b2) 20,1 bis 80 Gew.-% mindestens eines vernetzten kautschukelastischen Polymerisats als Komponente B2 und
b3) 0 bis 30 Gew.-% weiterer Zusatzstoffe und Verarbeitungshilfsmittel als Komponente B3,
wobei die Summe der Mengen der Komponenten B1, B2 und gegebenenfalls B3 100 Gew.-% ergibt.

Als Komponente B1 enthält die Formmasse B 20 bis 79,9, bevorzugt 20 bis 70, besonders bevorzugt 25 bis 55, insbesondere 30 bis 45 Gew.-% mindestens eines thermoplastischen Polyamids, Copolyamids oder deren Blends. Es können die Polyamide eingesetzt werden, die auch als Komponente A1 in der Formmasse A enthalten sein können. Besonders bevorzugt sind hier ebenfalls Polyamid 66 und Polyamid 6, insbesondere Polyamid 6.

Als Komponente B2 enthält die Formmasse B 20,1 bis 80, bevorzugt 30 bis 80, besonders bevorzugt 45 bis 75, insbesondere 55 bis 70 Gew.-% mindestens eines vernetzten kautschukelastischen Polymerisats. Die Komponente B2 bildet die disperse Phase.

Als Komponente B3 kann die Formmasse B bis zu 30, bevorzugt bis zu 10 Gew.-% weiterer Zusatzstoffe und Verarbeitungshilfsmittel enthalten. Es können die Zusatzstoffe und Verarbeitungshilfsmittel eingesetzt werden, die auch in der Formmasse A als Komponente A4 enthalten sein können.

Die Vicat-Erweichungstemperatur - bestimmt nach ISO 306, Methode B - der Formmasse B ist vorzugsweise > 180°C, besonders bevorzugt > 200°C.

Der Zug-Elastizitätsmodul der Formmasse B beträgt im allgemeinen 50 bis 1500, bevorzugt 200 bis 1000, besonders bevorzugt 350 bis 800 MPa.

Bevorzugte vernetzte kautschukelastische Polymerisate B2 sind Propfcopolymerisate aus
b21) 50 bis 97,9, bevorzugt 75 bis 95,5, besonders bevorzugt 85 bis 95 Gew.-% mindestens eines olefinisch ungesättigten Monomers als Komponente B21,
b22) 2 bis 50, bevorzugt 4 bis 25, besonders bevorzugt 8 bis 15 Gew.-% mindestens eines polyfunktionellen vernetzenden Monomeren als Komponente B22 und
b23) 0,1 bis 10, bevorzugt 0,5 bis 5, besonders bevorzugt 1 bis 3 Gew.-% mindestens eines olefinisch ungesättigten Monomeren mit einer gegenüber Polyamid reaktiven Gruppe als Komponente B23.

Als für die Komponente B21 geeignete olefinisch ungesättigte Monomere können gelten die C₁₋₁₀-, bevorzugt C₁₋₈-Alkylester der (Meth)acrylsäure, besonders bevorzugt n-Butylacrylat und/oder Ethylhexylacrylat.

Als vernetzende Monomere B21 werden polyfunktionelle Monomere mit mindestens zwei ethylenisch ungesättigten Gruppen eingesetzt. Von diesen werden polyfunktionelle, insbesondere difünktionelle Verbindungen mit nicht konjugierten Doppelbindungen bevorzugt. Beispielsweise seien hier Divinylbenzol, Diallylfumarat, Diallylmaleinat, Diallylphthalat, Triallylcyanurat, Triallylisocyanurat, Tricyclodecenylacrylat und Dihydrodicyclopentadienylacrylat genannt, von denen die letzen beiden besonders bevorzugt werden.

Als olefinisch ungesättigte Monomere B23 mit einer gegenüber Polyamid reaktiven Gruppe eignen sich besonders Acrylsäure, Methacrylsäure, Maleinsäure, Maleinsäureanhydrid, Fumarsäure und Glycidylmethacrylat, insbesondere Acrylsäure oder Methacrylsäure.

Vorzugsweise ist das kautschukelastische Polymerisat ein Kern-Schale-Polymerisat, d. h. ein aus einem Kern (Pfropfgrundlage) und einem oder mehreren Hüllen (Pfropfauflage) aufgebautes Polymerisat. Bevorzugt weist die Pfropfgrundlage nur die Komponenten B21 und B22 auf, während die gegenüber Polyamid reaktive Gruppen enthaltende Komponente B23 nur in der Schale vorliegt. Durch diesen Aufbau wird gewährleistet, daß die Gruppen, die eine Haftung an die Komponente B 1 bewirken, auch an der Oberfläche der Polymerisatteilchen vorliegen.

Gemäß einer bevorzugten Ausführungsform der Erfindung dienen als Pfropfgrundlage vernetzte Acrylsäureester-Polymerisate mit einer Glasübergangstemperatur unter 0°C, bevorzugt unter -20°C, insbesondere unter -30°C.

Geeignete Herstellverfahren zur Herstellung der Pfropfgrundlage A1 sind an sich bekannt und z.B. in der DE-B 1 260 135 beschrieben. Entsprechende Produkte sind auch kommerziell erhältlich. Als besonders vorteilhaft hat sich die Herstellung durch Emulsionspolymerisation erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengroße im Bereich von 10 bis 10 000, bevorzugt von 100 bis 1000 nm aufweist. Vorzugsweise hat der Latex eine enge Teilchengrößenverteilung.

Vorzugsweise wird die Pfropfhülle in Emulsion hergestellt, wie dies z.B. in der DE-B 12 60 135, DE-A 32 27 555, DE-A 31 49 357 und DE-A 34 14 118 beschrieben ist.

### FORMKÖRPER

In einer bevorzugten Ausführungsform der Erfindung bestehen die Formkörper aus Formassen A und B, deren Zug-Elastizitätsmodule sich mindestens um einen Faktor 2 unterscheiden.

Gemäß einer weiteren bevorzugten Ausführungsform enthalten die Formmassen A und B als Komponenten A1 und B1 das gleiche Polyamid.

Das Vermischen der Komponenten A1 bis A4 zur Formmasse A bzw. der Komponenten B1 bis B3 zur Formmasse B kann nach den bekannten Methoden erfolgen. Vorzugsweise erfolgt das Mischen der Komponenten durch gemeinsames Extrudieren oder Kneten der Komponenten.

Zweckmäßigerweise verwendet man hierzu Extruder, z.B. Einschnecken- oder Zweischneckenextruder oder andere herkömmliche Plastifizierungsvorrichtungen wie Brabender-Mühlen oder Banbury-Mühlen.

Das in wäßriger Dispersion erhaltene Produkt der Propfcopolymerisation (Komponente B2) kann, beispielsweise durch Sprühtrocknung, vor dem Vermischen vollständig getrocknet werden und als pulverförmiges Polymerisat mit den übrigen Komponenten vermischt werden. Es kann aber auch, wie in DE-A 33 13 919 beschrieben, die wäßrige Polymerisatdispersion eingesetzt werden. Dabei wird vorzugsweise zuerst das Polyamid in der Mischvorrichtung plastifiziert. Beim Vermischen der Polyamid-Schmelze mit der Polymerisatdispersion verdampft dann das Wasser, und die Kautschukteilchen verteilen sich gleichmäßig in der Schmelze.

Die Herstellung der Formkörper aus den Formmassen A und B kann nach bekannten Verfahren erfolgen, beispielsweise durch Spritzguß, Extrusion oder Extrusionsblasformen.

Die Herstellung der Formkörper kann beispielsweise durch Spritzguß erfolgen. Dabei können die Formmassen A oder B an ein erstarrtes Teilstück aus der jeweils anderen Formmasse angespritzt oder anextrudiert werden. Die Herstellung der Formkörper kann auch im Zweikomponenten-Spritzguß durch simultanes Anspritzen mit beiden Formmassen A und B, vorzugsweise von entgegengesetzten Enden der Spritzgußform aus, erfolgen.

Die Herstellung von Formkörpern im Spritzguß erfolgt vorzugsweise aus Formmassen A und B, die als Polyamid-Komponenten A1 bzw. B1 Polyamide mit einer Viskositätszahl von 140 bis 185 enthalten.

Die Formmassen A und B werden besonders vorteilhaft zur Herstellung von Hohlformkörpern eingesetzt. Die Herstellung von Hohlformkörpern aus unterschiedlichen Formmassen A und B erfolgt im allgemeinen durch Coextrusion der Formmassen A und B, wobei die formgebende Düse von mindestens zwei verschiedenen Extrudern beschickt wird. Es wird ein Schlauch extrudiert, der beide Formmassen A und B aufweist. Der extrudierte Schlauch kann der gewünschte Formkörper selbst - beispielsweise ein gerades Rohr - oder aber ein Vorformling sein, aus dem durch weitere Verfahrensschritte der Formkörper hergestellt wird.

Bei der Coextrusion des Hohlformkörpers oder Vorformlings kann mit zeitlich konstanten Stoffströmen von jedem der Extruder gearbeitet werden. Dabei wird ein Schlauch extrudiert, der über die Wanddicke verteilt eine Abfolge von Schichten gleicher oder unterschiedlicher Dicke aus jeweils einer der Formmassen A oder B aufweist, wobei die Schichtdicke und Zusammensetzung über die gesamte Länge des Schlauches konstant bleibt.

Vorteilhafter ist jedoch die Herstellung der Hohlformkörper oder Vorformlinge durch sequentielle Coextrusion, d. h. mit alternierenden Stoffströmen. Dies kann in der Weise geschehen, daß die formgebende Düse abwechselnd von je einem der Extruder, d. h. abwechselnd nur mit der Formmasse A oder der Formmasse B beschickt wird. Dabei wird ein Schlauch extrudiert, der über seine gesamte Länge eine alternierende Zusammensetzung mit Segmenten aus jeweils nur einer der Formmassen A oder B aufweist. Das Umschalten von einem Extruder auf den anderen kann schlagartig oder innerhalb eines begrenzten Zeitintervalls kontinuierlich erfolgen. Im letzteren Fall wird ein Schlauch erhalten, bei dem in einem (im Vergleich zur Gesamtlänge des extrudierten Schlauches) begrenzten Abschnitt Schichten aus beiden Formmassen vorliegen, wobei sich das Schichtdickenverhältnis kontinuierlich von 100% der Formmasse A (B) auf 100 % der Formmasse B (A) ändert. Dadurch wird eine flächige Verbindung zwischen den einzelnen Segmenten des Hohlformkörpers oder Vorformlings erreicht, mit dem Ergebnis einer deutlich verbesserten Haftung zwischen den Segmenten.

In einer bevorzugten Ausführungsform der Erfindung erfolgt kein vollständiges Umschalten von der einen Formmasse auf die andere. Dadurch werden Formkörper erhalten, die über ihre gesamte Länge beide Schichten aus jeweils der Formmasse A und B aufweisen, wobei die Abfolge der Schichten von außen nach innen beliebig sein kann. Dadurch können Hohlformkörper aus Hart- und Weichsegmenten mit unterschiedlichem Schichtdickenverhältnis erhalten werden. Das Verhältnis der Schichtdicken kann für jedes Segment grundsätzlich beliebig gewählt werden. Im allgemeinen besteht der Anteil der Schicht aus Formmasse A an der Wandstärke in den Hartsegmenten der Formkörper 70 bis 99,9, bevorzugt 70 bis 99, besonders bevorzugt 80 bis 95, insbesondere 85 bis 90 % und in den Weichsegmenten der Formkörper 0,1 bis 30, bevorzugt 1 bis 30, besonders bevorzugt 5 bis 20, insbesondere 10 bis 15 %, wobei der Anteil der Schicht aus der Formmasse B jeweils zu 100% komplementär ist. Vorzugsweise erfolgt die Änderung der Schichtdicken zwischen den Hart- und Weichsegmenten nicht schlagartig, sondern kontinuierlich über einen Länge, die beispielsweise der 5-fachen Wandstärke entspricht.

Es können auch Vorformlinge oder Formkörper extrudiert werden, die mehr als nur zwei Schichten aufweisen, wobei die Abfolge der Schichten von außen nach innen beliebig sein kann, und die Dicke der einzelnen Schichten variieren kann. Beispielsweise kann ein Aufbau der Formkörper aus drei Schichten mit der Abfolge A-B-A oder B-A-B vorliegen. Die Formkörper können auch Segmente mit unterschiedlicher Anzahl von Schichten aufweisen.

Vorzugsweise weisen die erfindungsgemäßen Formkörper zwei Schichten auf.

Die Coextrusion kann mit weiteren, an sich bekannten Verfahrensschritten zur Herstellung von Hohlformkörpern mit von der einfachen Schlauchform (gerade Geometrie mit über die Länge konstantem Durchmesser) abweichender Geometrie kombiniert werden. Die Herstellung von Hohlformkörpern kann beispielsweise durch Extrusionsblasformen geschehen. Dabei wird der Schlauch in eine geöffnete Form extrudiert, die Form geschlossen und der Schlauch aufgeblasen. Im formgebenden Schritt werden die Wände des Vorformlings durch den Gas-Innendruck gegen die Innenwand der Form gepreßt und erstarren.

Die Formgebung kann auch in der Weise erfolgen, daß der Vorformling zuerst aufgeblasen und die Form anschließend geschlossen wird. Dadurch werden im allgemeinen Hohlformkörper mit umlaufender Quetschnaht erhalten.

Vorzugsweise erfolgt bei der Herstellung der erfindungsgemäßen Formkörper die Formgebung durch Aufblasen des Vorformlings nach Schließen der Form.

Die Herstellung von Hohlformkörpern mit komplizierter Geometrie kann auch durch Kombination von Blasformen und sogenannter 3D-Extrusion erfolgen. Dabei wird ein Schlauch extrudiert und unter Verformung entsprechend der Formkörperkonturen in die geöffnete Werkzeughälfte eingelegt. Das Einlegen des Schlauches kann beispielsweise durch Bewegen der geöffneten Blasform unter dem Extruder, durch Bewegen des Extruders über der geöffneten Blasform oder durch Manipulation des extrudierten Schlauches mittels eines Greifarms erfolgen. Dann wird die Blasform geschlossen und der Schlauch aufgeblasen. Der extrudierte Schlauch kann auch in die Blasform eingesaugt und aufgeblasen werden. Verfahren zur 3-D-Extrusion bzw. Schlauchmanipulation sind dem Fachmann bekannt. Es werden Hohlformkörper komplizierter Geometrie ohne umlaufende Quetschnaht erhalten.

Die Formmassen A und B, die zur Herstellung von Hohlformkörpern durch einfache (Co)extrusion ohne anschließendes Blasformen verwendet werden, weisen vorzugsweise als Komponenten A1 bzw. B1 Polyamide mit einer Viskositätszahl zwischen 190 und 285 auf.

Die Formmassen A und B, die zur Herstellung von Hohlformkörpern durch Extrusion mit anschließendem Blasformen verwendet werden, weisen vorzugsweise als Komponenten A1 bzw. B1 Polyamide mit einer Viskositätszahl zwischen 250 und 400 auf.

In einer bevorzugten Ausführungsform des erfindungsgemäßen Verfahrens werden Hohlformkörper durch 3D-Extrusion und anschließendes Blasformen hergestellt. Dabei können Blasformteile mit flexiblen Endzonen und hartem Mittelteil hergestellt werden. Typische Anwendungsfälle sind vor allem Teile für den Automobil- und Maschinenbau. Beispiele sind Luftansaugrohre oder Luftführungsrohre, die für eine gute Montage und Abdichtung der Enden einerseits und eine ausreichende Stabilität gegen Unter- bzw. Überdruck im Mittelteil andererseits eine Weich-Hart-Weich-Kombination erfordern.

Die erfindungsgemäßen Formkörper weisen den Vorteil auf, daß trotz der unterschiedlichen Steifigkeit der Formkörper-Segmente andere für die Anwendung wesentliche Eigenschaften über die gesamte Länge des Formkörpers erhalten bleiben, also sowohl in den Hart- als auch in den Weichsegmenten vorliegen.

So weist die Formmasse B trotz ihres unter Umständen hohen Olefinpolymerisat-Anteils die für Polyamide typischen Eigenschaften wie eine hohe Wärmeformbeständigkeit und gute Lösungsmittelbeständigkeit auf. Diese Eigenschaften sind folglich auch in den Weichsegmenten (mit einem hohen Anteil der Formmasse B) gegeben. Auch ist die Zugfestigkeit der Komponente B vergleichsweise hoch. Die erfindungsgemäßen Formkörper zeichnen sich daher über ihre gesamte Länge durch eine hohe Berstdruckfestigkeit aus.

Die erfindungsgemäßen Formkörper zeichnen sich insbesondere auch dadurch aus, daß sie Segmente unterschiedlicher Zusammensetzung mit unterschiedlichen Eigenschaftskombinationen vereinen, ohne daß Zwischenschichten aus Haftvermittlern vorliegen müssen. Solche Zwischenschichten sind in der Regel nicht erwünscht, da sie die Zahl der Materialübergänge erhöhen. Ferner stellen Zwischenschichten aus üblichen Haftvermittlern Schwachstellen bezüglich Wärmeformbetändigkeit und Chemikalienresistenz (Lösungsmittelbeständigkeit) dar.

Die erfindungsgemäßen Formkörper zeichnen sich insbesondere auch durch eine hohe Dauergebrauchstemperatur und gute Wärmealterungsbeständigkeit aus. Daher eignen sie sich besonders für Anwendungen im Kraftfahrzeugbereich, insbesondere für den Einsatz im Innern von Kraftfahrzeugen, beispielsweise im Motorraum als Gas- oder Flüssigkeitsleitungen.

In einer besonders bevorzugten Ausführungsform der Erfindung werden Hohlformkörper in Form von Luft- und Kühlflüssigkeitsführungsrohren für Kraftfahrzeuge hergestellt.

Die Erfindung wird durch die nachstehenden Beispiele näher erläutert.

### BEISPIELE

In den Beispielen kamen zweikomponentige Zugstäbe aus den Formmassen A und B sowie einkomponentige Zugstäbe aus jeweils einer Formmasse zum Einsatz.

Zur Herstellung der zweikomponentigen Zugstäbe wurden die Formmassen A und B bei 270°C mit einer Arburg-Zweikomponenten-Spritzgußmaschine zu Normzugstäben gemäß den Dimensionen von ISO 527 verspritzt (Dicke: 4 mm, Länge: 160 mm, Breite Mittelbereich: 10 mm), wobei die Zugstäbe von beiden Seiten mit je einer Komponente so angespritzt wurden, daß die Trennlinie zwischen A und B etwa in der Mitte des Zugstabes zu liegen kam. Die Trennlinie war durch die unterschiedliche Einfärbung der Komponenten problemlos sichtbar.

Ferner wurden von den jeweiligen Komponenten nach Standard-Methode einkomponentige Zugstäbe gespritzt.

An den Zweikomponenten-Zugstäben wurde die Zugfestigkeit (Bruch erfolgte immer an der Grenzfläche) bestimmt.

An den Einkomponenten-Zugstäben wurde der Zug-Elastizitätsmodul und die Reißfestigkeit nach ISO 527 sowie die Vicat-Erweichungstemperatur (Methode B) nach ISO 306 bestimmt. Ferner wurden Teile aus den jeweiligen Formmassen für 6h in Toluol unter Rückfluß gekocht und die Lösungsmittelaufnahme bestimmt. Die Ergebnisse sind in der nachstehenden Tabelle wiedergegeben.

Die eingesetzten Formmassen wiesen die folgende Zusammensetzung auf:

### BEISPIEL 1

Formmasse A aus Polyamid 6 mit 30 Gew.-% Glasfaser verstärkt, Viskositätszahl (VZ) = 142 ml/g (Ultramid B3WG6 der BASF AG, Ludwigshafen, DE)

Formmasse B aus 42 Gew.-% Polyamid 6, VZ = 150 (Ultramid B3 der BASF AG) und 58 Gew.-% eines Dispersionskautschuks aus n-Butylacrylat mit 8% Dicyclopentadienylacrylat (DCPA) als Vernetzer, Propfhülle aus Methylmethacrylat mit 1 Gew.-% Methacrylsäure, mit einer Teilchengröße von 0,1 µm, konfektioniert bei 280°C mit einem Zweiwellenextruder (ZSK 30 von Werner + Pfleiderer) bei 200 Umdrehungen und einem Durchsatz von 12 kg/h.

### BEISPIEL 2

wie Beispiel 1, jedoch Formmasse A aus Polyamid 6 mit 15 Gew.-% Glasfasern verstärkt, VZ = 175 ml/g (Ultramid B35WG3 der BASF AG)

### BEISPIEL 3

wie Beispiel 1, jedoch Formmasse A aus unverstärktem Polyamid 6, VZ = 180 ml/g (Ultramid B35W der BASF AG)

### BEISPIEL 4

Formmasse A aus unverstärktem Polyamid 6, VZ = 330 ml/g (Ultramid B6W der BASF AG)
Formmasse B aus 42 Gew.-% Polyamid 6, VZ = 250 (Ultramid B4 der BASF AG) und 58% des Dispersionskautschuks aus Beispiel 1

### BEISPIEL 5

wie Beispiel 4, aber Formmasse B aus 35 Gew.-% des Polyamids und 65 Gew.-% des Dispersionskautschuks

### BEISPIEL 6

wie Beispiel 4, aber Formmasse B aus 55 Gew.-% des Polyamids und 45 Gew.-% des Dispersionskautschuks

### BEISPIEL 7

wie Beispiel 4, aber Formmasse B aus 70 Gew.-% des Polyamids und 30 Gew.-% des Dispersionskautschuks

### BEISPIEL 8

wie Beispiel 4, aber Formmasse A aus Polyamid 6 mit 20 Gew.-% Glasfasern verstärkt, VZ = 300 (Ultramid KR 4465 G4 der BASF AG)

### VERGLEICHSBEISPIEL V 1

wie Beispiel 4, aber Formmasse B aus 90 Gew.-% des Polyamids und 10 Gew.-% des Dispersionskautschuks

### VERGLEICHSBEISPIEL V 2

wie Beispiel 4, aber Formmasse B mit 42 Gew.-% des Polyamids und 58 Gew.-% eines unvernetzten Dispersionskautschuks aus 100 Gew.-% n-Butylacrylat im Kern und 99 Gew.-% n-Butylacrylat und 1 Gew.-% Methacrylsäure in der Schale.

### VERGLEICHSBEISPIEL V 3

wie Beispiel 4, aber Formmasse B aus 42 Gew.-% des Polyamids und 58 Gew.-% eines Ethylen-Propylen-Copolymeren mit 30 Gew.-% Ethylen, gepfropf mit mit 0,8 Gew.-% Maleinsäureanhydrid (Exxelor VA 1803 von EXXON Chemicals) als Weichpolymer

### VERGLEICHSBEISPIEL V 4

wie Vergleichsbeispiel V 2, aber Formmasse B aus 70 Gew.-% des Polyamids und 30 Gew.-% des Weichpolymeren

### VERGLEICHSBEISPIEL V 5

wie Beispiel 4, aber Formmasse B aus 42 Gew.-% des Polyamids und 58 Gew.-% eines Copolymeren aus 63 Gew.-% Ethylen, 35 Gew.-% Butylacrylat und 2 Gew.-% Acrylsäure (Lotader 4700 von Atochem) als Weichpolymer

### VERGLEICHSBEISPIEL V 6

wie Vergleichsbeispiel V 4, aber Formmasse B aus 70 Gew.-% des Polyamids und 30 Gew.-% des Weichpolymeren

### BEISPIEL 10

Eine modifizierte Zweikomponenten-Blasform-Anlage mit zwei 90 mm-Extrudern und einem 45 mm-Extruder wurde mit einer Formmasse A aus Polyamid 6, VZ = 310 ml/g (Ultramid B6W der BASF AG) auf einem der 90 mm-Extruder und einer Formmasse B aus einer konfektionierten Mischung aus 42 Gew.-% Polyamid 6, VZ = 285 (Ultramid B4 der BASF AG) und 58 Gew.-% eines Dispersionskautschuks aus n-Butylacrylat mit 4% Vernetzer, Pfropfhülle aus Methylmethacrylat mit 1 Gew.-% Methacrylsäure (Paraloid 3387 von Rohm + Haas) auf dem zweiten 90 mm-Extruder betrieben, der 45 mm-Extruder war außer Betrieb. Durch modifizierte Steuerung konnte der Durchsatz der beiden Extruder zwischen den Betriebszuständen:

| | | |
|---|---|---|
| Betriebszustand 1 | Extruder 1 = 54 kg/h, | Extruder 2 = 6 kg/h |
| Betriebszustand 2 | Extruder 1 = 6 kg/h, | Extruder 2 = 54 kg/h |

umgeschaltet werden. Der Gesamtdurchsatz betrug 60 kg/h, die Verarbeitungstemperatur betrug in beiden Extrudern 250°C. Es wurde ein Schlauch von 1500 mm mit einer äußeren Schicht aus der Formmasse A und einer inneren Schicht aus der Formmasse B ausgestoßen und zu einem geraden, rechteckigen Hohlformkörper von 120 mm x 120 mm Querschnitt und 720 mm Länge aufgeblasen. Die Wanddicke lag zwischen 3 und 5 mm. Es wurden am Anfang und am Ende des Schlauches Hartsegmente aus 90 Gew.-% der Formmasse A (außen) und 10 Gew.-% der Formmasse B (innen), in der Mitte ein 150 mm langes Weichsegment aus 10 Gew.-% der Formmasse A (außen) und 90 Gew.-% der Formmasse B (innen) extrudiert. Der Übergang zwischen den beiden Schichtdicke-Verteilungen erfolgte auf einer Strecke von jeweils 20 mm.

### BEISPIEL 11

wie Beispiel 10, aber mit einer Formmasse A aus Polyamid 6 mit 20 Gew.-% Glasfasern verstärkt, VZ = 300 (Ultramid KR 4465 G4 der BASF AG)

Es wurden Hohlformkörper mit einheitlicher Oberfläche und guter Haftung zwischen den Segmenten erhalten.

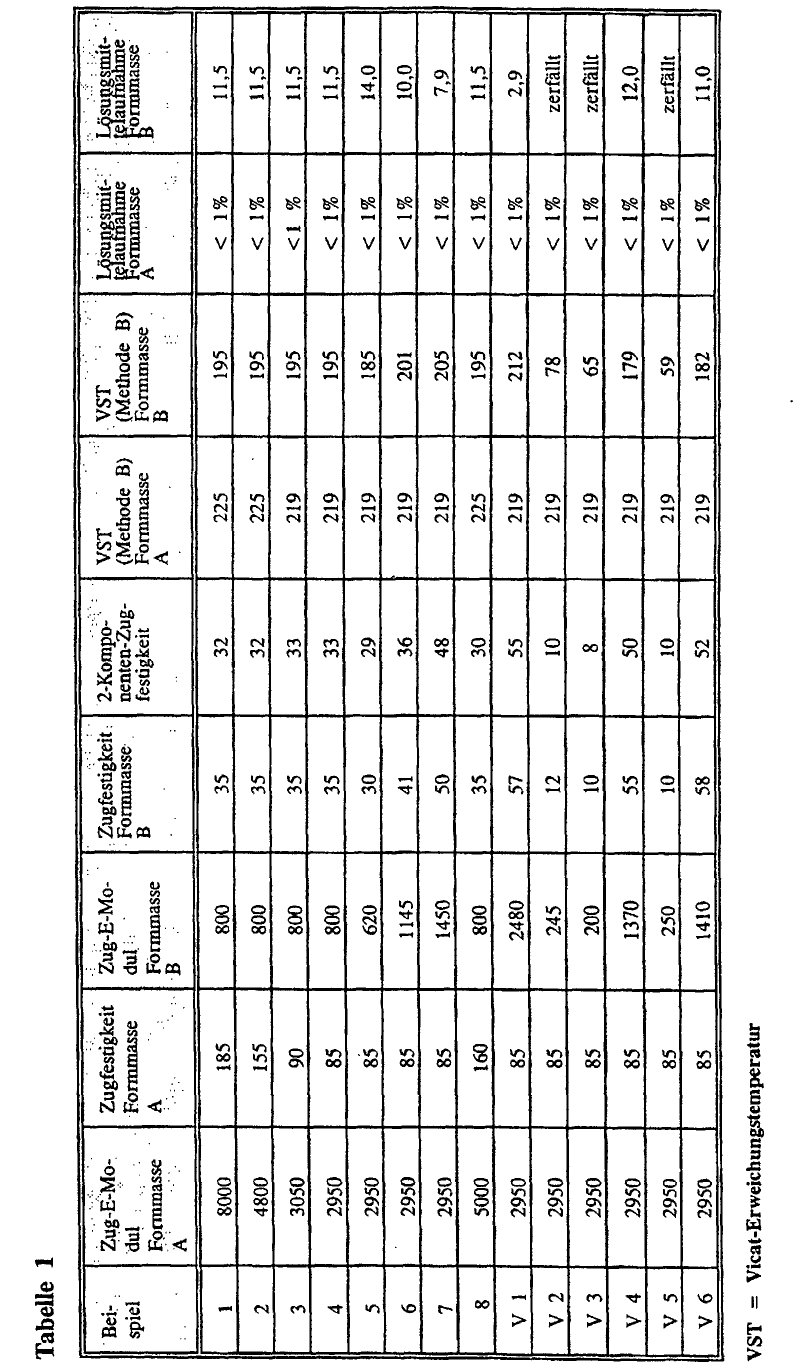

## Patentansprüche

1. Formkörper aus
a) 5 bis 95 Gew.-% einer Formmasse A aus
a1) 40 bis 100 Gew.-% mindestens eines thermoplastischen Polyamids, Copolyamids oder deren Blends als Komponente A1,
a2) 0 bis 60 Gew.-% Füll- und/oder Verstärkungsstoffen als Komponente A2,
a3) 0 bis 20 Gew.-% Schlagzähmodifikatoren als Komponente A3,
a4) 0 bis 30 Gew.-% weiterer Zusatzstoffe und Verarbeitungshilfsmittel als Komponente A4,
wobei die Summe der Mengen der Komponenten A1 und gegebenenfalls A2 bis A4 100 Gew.-% ergibt,
b) 5 bis 95 Gew.-% einer Formmasse B aus
b1) 20 bis 79,9 Gew.-% mindestens eines thermoplastischen Polyamids, Copolyamids oder deren Blends als Komponente B1,
b2) 20,1 bis 80 Gew.-% mindestens eines vernetzten kautschukelastischen Polymerisats als Komponente B2 und
b3) 0 bis 30 Gew.-% weiterer Zusatzstoffe und Verarbeitungshilfsmittel als Komponente B3,
wobei die Summe der Mengen der Komponenten B1, B2 und gegebenenfalls B3 100 Gew.-% ergibt,
wobei im Formkörper Segmente aus den Formmassen A und B flächig miteinander verbunden sind.

2. Formkörper nach Anspruch 1, wobei die Formmasse A eines oder mehrere der nachstehenden Merkmale aufweist:
- Komponente A1 enthält Polyamid 6 und/oder 66,
- Komponente A2 besteht aus Glasfasern,
- Komponente A4 enthält Wärmestabilisatoren
- Viskositätszahl von Komponente A1 beträgt 130 bis 500
- Zug-Elastizitätsmodul von Formmasse A ist > 2000 MPa.

3. Formkörper nach Anspruch 1 oder 2, wobei die Formmasse B eines oder mehrere der nachstehenden Merkmale aufweist:
- Komponente B1 enthält. Polyamid 6 und/oder 66
- Komponente B3 enthält Wärmestabilisatoren
- Zug-Elastizitätsmodul von Formmasse B beträgt 50 bis 1500 MPa
- Vicat-Erweichungstemperatur (Methode B) der Formmasse B ist > 180°C

4. Formkörper nach einem der Ansprüche 1 bis 3, **dadurch gekennzeichnet, daß** es sich bei der Komponente B2 um durch Emulsionspolymerisation hergestellte Copolymere aus
b21) 50 bis 97,9 Gew.-% mindestens eines olefinisch ungesättigten Monomers, vorzugsweise eines C₁₋₈-Alkylester der Acrylsäure, insbesondere n-Butylacrylat und/oder Ethylhexylacrylat als Komponente B21,
b22) 2 bis 50 Gew.-% mindestens eines polyfunktionellen vernetzenden Monomeren als Komponente B22 und
b23) 0,1 bis 10 Gew.-% mindestens eines olefinisch ungesättigten Monomeren mit einer gegenüber Polyamid reaktiven Gruppe, bevorzugt Acrylsäure, Methacrylsäure, Maleinsäure, Maleinsäureanhydrid, Fumarsäure und/oder Glycidylmethacrylat, insbesondere Acrylsäure oder Methacrylsäure, als Komponente B23,
wobei die Summe der Mengen der Komponenten B21, B22 und B23 100 Gew.-% ergibt, mit einem oder mehreren der Merkmale:
- B2 ist ein Kern/Schale-Polymer,
- die reaktiven Gruppen liegen nur in der Schale vor,
- Glasübergangstemperatur des Kerns < 0°C
- die Teilchengröße beträgt 0,01 bis 10 µm
handelt.

5. Formkörper nach einem der Ansprüche 1 bis 4 mit mindestens einem der Merkmale
- die Zug-Elastizitätsmodule der Formmassen A und B unterscheiden sich mindestens um einen Faktor 2,
- die Formmassen A und B enthalten das gleiche Polyamid

6. Formkörper nach einem der Ansprüche 1 bis 5, **dadurch gekennzeichnet, daß** der Formkörper ein Hohlformkörper ist.

7. Formkörper nach Anspruch 6 in Form eines Luft- oder Kühlflüssigkeitsführungsrohres für Kraftfahrzeuge.

8. Formkörper nach Anspruch 6 oder 7, wobei die Wandung des Hohlformkörpers zumindest teilweise von außen nach innen eine Abfolge von Schichten aus den Formmassen A und B darstellt, wobei von außen nach innen die Abfolge A - B und/oder B - A vorliegt.

9. Formkörper nach einem der Ansprüche 1 bis 8, hergestellt durch Spritzgießen, Extrusion oder Extrusionsblasformen.

10. Verfahren zur Herstellung von Formkörpern aus den Formmassen A und B, wie sie in den Ansprüchen 1 bis 5 definiert sind, durch
- Spritzgießen, wobei die Komponenten A1 und B1 eine Viskositätszahl von 140 bis 185 aufweisen, oder
- Extrusion, wobei die Komponenten A1 und B1 eine Viskositätszahl von 190 bis 285 aufweisen, oder
- Extrusionsblasformen, wobei die Komponenten A1 und B1 eine Viskositätszahl von 250 bis 400 aufweisen.

11. Verwendung der Formmassen A und/oder B, wie sie in einem der Ansprüche 1 bis 5 definiert sind, zur Herstellung von Formkörpern, wie sie in einem der Ansprüche 1 bis 9 definiert sind.

12. Verwendung von Formkörpern nach einem der Ansprüche 1 bis 9 im Kraftfahrzeugbereich.

## Claims

1. A shaped article made from
a) from 5 to 95% by weight of a molding composition A composed of
a1) from 40 to 100% by weight of at least one thermoplastic polyamide, copolyamide or blends of these as component A1,
a2) from 0 to 60% by weight of fillers and/or reinforcing materials as component A2,
a3) from 0 to 20% by weight of impact modifiers as component A3 and
a4) from 0 to 30% by weight of other additives and processing aids as component A4,
where the total of the amounts of components A1 and, if used, A2 to A4, is 100% by weight,
b) from 5 to 95% by weight of a molding composition B composed of
b1) from 20 to 79.9% by weight of at least one thermoplastic polyamide, copolyamide or blends of these as component B1,
b2) from 20.1 to 80% by weight of at least one crosslinked elastomeric polymer as component B2 and
b3) from 0 to 30% by weight of other additives and processing aids as component B3,
where the total of the amounts of components B1, B2 and, if used, B3 is 100% by weight,
where, in the shaped article, segments of the molding compositions A and B are connected to one another over a relatively large area.

2. A shaped article as claimed in claim 1, where the molding composition A has one or more of the following features:
- component A1 comprises nylon-6 and/or -6,6,
- component A2 consists of glass fibers,
- component A4 comprises heat stabilizers
- the viscosity number of component A1 is from 130 to 500
- the tensile modulus of molding composition A is > 2000 MPa.

3. A shaped article as claimed in claim 1 or 2, where the molding composition B has one or more of the following features:
- component B1 comprises nylon-6 and/or -6,6
- component B3 comprises heat stabilizers
- the tensile modulus of molding composition B is from 50 to 1500 MPa
- the Vicat softening point (method B) of molding composition B is > 180°C.

4. A shaped article as claimed in any one of claims 1 to 3, wherein emulsion copolymers of
b21) from 50 to 97.9% by weight of at least one olefinically unsaturated monomer, preferably of a C₁₋₈-alkyl acrylate, in particular n-butyl acrylate and/or ethylhexyl acrylate, as component B21,
b22) from 2 to 50% by weight of at least one polyfunctional crosslinking monomer, as component B22 and
b23) from 0.1 to 10% by weight of at least one olefinically unsaturated monomer having a group which is reactive to polyamide, preferably acrylic acid, methacrylic acid, maleic acid, maleic anhydride, fumaric acid and/or glycidyl methacrylate, in particular acrylic acid or methacrylic acid, as component B23,
where the sum of the amounts of components B21, B22 and B23 is 100% by weight, having one or more of the features:
- B2 is a core-shell polymer,
- the reactive groups are present only in the shell,
- the glass transition temperature of the core is < 0°C
- the particle size is from 0.01 to 10 µm
are used as component B2.

5. A shaped article as claimed in any one of claims 1 to 4, having at least one of the features:
- the tensile modulus of molding compositions A and B differ by a factor of at least 2, and
- molding compositions A and B comprise the same polyamide.

6. A shaped article as claimed in any one of claims 1 to 5, wherein the shaped article is a hollow shaped article.

7. A shaped article as claimed in claim 6 in the form of an air or coolant duct for motor vehicles.

8. A shaped article as claimed in claim 6 or 7, wherein the wall of the hollow shaped article has, at least to some extent, a sequence of layers of the molding compositions A and B from outside to inside, the sequence from outside to inside being A - B and/or B - A.

9. A shaped article as claimed in any one of claims 1 to 8, produced by injection molding, extrusion or extrusion blow molding.

10. A process for producing a shaped article from molding compositions A and B, as they are defined in claims 1 to 5, by
- injection molding, where components A1 and B1 have a viscosity number of from 140 to 185, or
- extrusion, where components A1 and B1 have a viscosity number of from 190 to 285, or
- extrusion blow molding, where components A1 and B1 have a viscosity number of from 250 to 400.

11. The use of molding compositions A and/or B, as they are defined in any one of claims 1 to 5, for producing shaped articles, as they are defined in any one of claims 1 to 9.

12. The use of shaped articles as claimed in any one of claims 1 to 9 in the motor vehicle sector.

## Revendications

1. Corps moulés constitués de
a) 5 à 95% en poids d'une masse de moulage A à base de
a1) 40 à 100% en poids d'au moins un polyamide, copolyamide thermoplastique, ou leurs mélanges, en tant que composant A1,
a2) 0 à 60% en poids de charges et / ou d'agents de renforcement en tant que composant A2,
a3) 0 à 20% en poids de modificateurs de la résistance au choc en tant que composant A3,
a4) 0 à 30% en poids d'autres additifs et adjuvants de traitement en tant que composant A4,
la somme des quantités des composants A1 et éventuellement A2 à A4 totalisant 100% en poids,
b) 5 à 95% en poids d'une masse de moulage B constituée de
b1) 20 à 79,9% en poids d'au moins un polyamide, copolyamide thermoplastique, ou leurs mélanges, comme composant B1,
b2) 20,1 à 80% en poids d'au moins un polymère réticulé à élasticité de caoutchouc en tant que composant B2 et
b3) 0 à 30% en poids d'autres additifs et adjuvants de traitement en tant que composant B3,
la somme des quantités des composants B1, B2 et éventuellement B3 totalisant 100% en poids,
et des segments constitués des masses thermoplastiques A et B étant liés ensemble par leur surface dans les corps moulés.

2. Corps moulés selon la revendication 1, où la masse de moulage A présente une ou plusieurs des caractéristiques ci-après:
- le composant A1 contient du polyamide 6 et / ou 66,
- le composant A2 est constitué de fibres de verre,
- le composant A4 contient des stabilisants à la chaleur,
- l'indice de viscosité du composant A1 est de 130 à 500,
- le module d'élasticité à la traction de la masse de moulage A est > 2000 MPa.

3. Corps moulés selon la revendication 1 ou 2, où la masse de moulage B présente une ou plusieurs des caractéristiques ci-après:
- le composant B1 contient du polyamide 6 et / ou 66,
- le composant B3 contient des stabilisants à la chaleur,
- le module d'élasticité à la traction de la masse de moulage B est de 50 à 1500 MPa,
- la température de ramollissement Vicat (méthode B) de la masse de moulage B est > 180°C.

4. Corps moulés selon l'une des revendications 1 à 3, **caractérisés en ce que** les composants B2 sont des copolymères préparés par polymérisation en émulsion, à partir de:
b21) 50 à 97,9% en poids d'au moins un monomère oléfiniquement insaturé, de préférence un alkylester en C₁₋₈ de l'acide acrylique, en particulier de l'acrylate de n-butyle et / ou de l'acrylate d'éthylhexyle en tant que composant B21,
b22) 2 à 50% en poids d'au moins un monomère réticulant polyfonctionnel en tant que composant b22 et
b23) 0,1 à 10% en poids d'au moins un monomère oléfiniquement insaturé comportant un groupe réactif vis-à-vis du polyamide, de préférence de l'acide acrylique, de l'acide méthacrylique, de l'acide maléique, de l'anhydride maléique, de l'acide fumarique et / ou du méthacrylate de glycidyle, en particulier de l'acide acrylique ou de l'acide méthacrylique, en tant que composant B23,
la somme des quantités des composants B21, B22 et B23 totalisant 100% en poids, avec une ou plusieurs des caractéristiques suivantes:
- B2 est un polymère à noyau / gaine,
- les groupes réactifs se trouvent uniquement dans la gaine,
- la température de transition vitreuse du noyau est < 0°C,
- la taille de particules est de 0,01 à 10 µm.

5. Corps moulés selon l'une des revendications 1 à 4 présentant au moins l'une des caractéristiques suivantes:
- les modules d'élasticité en traction des masses de moulage A et B diffèrent d'au moins un facteur 2,
- les masses de moulage A et B contiennent le même polyamide.

6. Corps moulé selon l'une des revendications 1 à 5, **caractérisé en ce que** le corps moulé est un corps creux.

7. Corps moulé selon la revendication 6, sous la forme de tuyau d'amenée d'air ou de liquide de refroidissement pour véhicules automobiles.

8. Corps moulé selon la revendication 6 ou 7, où la paroi du corps moulé creux constitue au moins en partie, de l'extérieur vers l'intérieur, une succession de couches constituées des masses de moulage A et B, et présentant de l'extérieur vers l'intérieur la séquence A - B et / ou B - A.

9. Corps moulés selon l'une des revendications 1 à 8, préparés par moulage par injection, extrusion ou extrusion-soufflage.

10. Procédé de préparation de corps moulés constitués des masses de moulage A et B, telles que définies dans les revendications 1 à 5, par
- moulage par injection, auquel cas les composants A1 et B1 présentent un indice de viscosité de 140 à 185, ou
- extrusion, auquel cas les composants A1 et B1 présentent un indice de viscosité de190 à 285, ou
- extrusion-soufflage, auquel cas les composants A1 et B1 présentent un indice de viscosité de 250 à 400.

11. Utilisation des masses de moulage A et / ou B, telles que définies dans les revendications 1 à 5, pour la production de corps moulés, tels que définis dans les revendications 1 à 9.

12. Utilisation de corps moulés selon l'une des revendications 1 à 9 dans le domaine de l'automobile.
